# EUROPÄISCHE PATENTSCHRIFT

(11) **EP 0 692 154 B1**
(45) Veröffentlichungstag und Bekanntmachung des Hinweises auf die Patenterteilung: **25.11.1998**
(21) Anmeldenummer: 95902052.0
(22) Anmeldetag: 03.12.1994
(51) Int. Cl.: H02H 5/12, H05B 41/29

(54) **GETAKTETE STROMVERSORGUNG**
CLOCKED CURRENT SUPPLY
DISPOSITIF D'ALIMENTATION CADENCEE EN COURANT

(30) Priorität: 14.12.1993 DE 4342590
(43) Veröffentlichungstag der Anmeldung: 17.01.1996
(73) Patentinhaber: ROBERT BOSCH GMBH, 70442 Stuttgart (DE)
(72) Erfinder: PREIS, Karl-Heinrich, D-77830 Buehlertal (DE)
(86) Internationale Anmeldenummer: DE9401446
(87) Internationale Veröffentlichungsnummer: WO9517032

(56) Entgegenhaltungen:
- DE-A- 4 117 589
- US-A- 4 507 698
- US-A- 5 140 229

## Beschreibung

### Stand der Technik

Die Erfindung geht aus von einer getakteten Stromversorgung nach der Gattung des Hauptanspruchs. Aus der DE-OS 41 17 589 ist eine derartige getaktete Stromversorgung bekannt, die als elektronisches Vorschaltgerät zum Betreiben von Hochdruck-Gasentladungslampen ausgebildet ist. Das elektronische Vorschaltgerät enthält einen mittels eines Schaltsignals getaktet betriebenen Spannungswandler, der die aus einer Kraftfahrzeugbatterie entnommene Energie zunächst in eine Gleichspannung umsetzt. Am Gleichspannungsausgang des getakteten Spannungswandlers ist ein Wechselrichter angeschlossen, der eine Wechselspannung geeigneter Frequenz zur Energieversorgung der Gasentladungslampe erzeugt. Die Frequenz des Schaltsignals, die der Betriebsfrequenz des getakteten Spannungswandlers entspricht, liegt vorzugsweise im Kilohertzbereich, beispielsweise im Bereich von 10 kHz bis einigen hundert kHz, während die Frequenz der vom Wechselrichter an die Lampe abgegebenen Betriebsspannung vorzugsweise im Bereich von einigen hundert Hz liegt.

Die bekannte getaktete Stromversorgung enthält eine Fehlerstromermittlung, die einen an einem ohmschen Meßwiderstand auftretenden Spannungsabfall auswertet und die gegebenenfalls ein Abschaltsignal an den getakteten Spannungswandler abgibt. Die Fehlerstromermittlung schützt Personen, die versehentlich spannungsführende Teile des Vorschaltgeräts, insbesondere die Anschlußleitungen der Gasentlasungslampe berühren. Der ohmsche Meßwiderstand verbindet einen vorgegebenen Anschluß am Ausgang des getakteten Spannungswandlers mit der elektrischen Fahrzeugmasse. Ein auswertbarer Fehlerstrom kann bei dem vorbekannten elektronischen Vorschaltgerät nur dann auftreten, wenn zwischen dem Ausgang des getakteten Spannungswandlers und der elektrischen Fahrzeugmasse, die über die Kraftfahrzeugbatterie galvanisch mit dem Eingang des getakteten Spannungswandlers verbunden ist, eine Potentialtrennung vorgesehen ist. Zur Potentialtrennung ist ein im getakteten Spannungswandler angeordneter Leistungsübertrager mit galvanisch getrennten Primär- und Sekundärwicklungen angeordnet.

Aus der DE-PS 41 41 804 ist ebenfalls ein elektronisches Vorschaltgerät zum Betreiben von Gasentladungslampen bekannt, das einen getakteten Spannungswandler enthält, an dessem Ausgang ein Wechselrichter angeschlossen ist zum Bereitstellen einer geeigneten Wechselspannung zur Energieversorgung der Gasentladungslampe. Die an der Gasentladungslampe auftretenden Potentiale sind derart festgelegt, daß die Gasentladungslampe zumindest im zeitlichen Mittel stets negatives Potential gegenüber den sie umgebenden Teilen, beispielsweise der Leuchte oder der Kraftfahrzeugkarosserie, aufweist. Mit dieser Maßnahme wird eine für die Gasentladungslampe schädliche Ionendiffusion in den Lampenkörper verhindert. Der getaktete Spannungswandler ist als einfacher Drossel-Aufwärtswandler ausgebildet, der neben der Drossel als wesentliche Teile ein Schaltelement, eine Gleichrichterdiode sowie einen Ausgangskondensator aufweist. Maßnahmen, die einen Schutz von Personen gegen zufälliges Berühren von spannungsführenden Teilen sicherstellen, sind nicht beschrieben.

In einem IEEE-Report "IAS Annual Meeting", 2.-6. Oktober 1977, Los Angeles, S. 1113, ist ein getakteter Spannungswandler beschrieben, der einen hohen Wirkungsgrad aufweist. Der getaktete Spannungswandler enthält einen Transformatorkern, der zwei getrennte Wicklungen aufweist. Die Verbindung zu einem am Ausgang angeordneten Kondensator, an dem die Ausgangsgleichspannung auftritt, wird über einen Kondensator und eine separate Drossel hergestellt. Die Leistungsübertragung zum Ausgang hin kann nur kapazitiv erfolgen. Der vorbekannte Spannungswandler kann als Basis für eine Weiterentwicklung dienen.

Der Erfindung liegt die Aufgabe zugrunde, eine getaktete Stromversorgung mit einer Fehlerstromermittlung anzugeben, die einen einfach zu realisierenden getakteten Spannungswandler enthält.

Die Aufgabe wird durch die im Hauptanspruch angegebenen Merkmale gelöst.

### Vorteile der Erfindung

Die erfindungsgemäße getaktete Stromversorgung weist den Vorteil auf, daß zwischen von Personen berührbaren spannungsführenden Teilen am Ausgang und dem Eingang eines getakteten Spannungswandlers keine Potentialtrennung erforderlich ist. Die schaltungstechnische Ausgestaltung des Spannungswandlers kann deshalb ausschließlich im Hinblick auf maximalen Wirkungsgrad erfolgen.

Erfindungsgemäß ist vorgesehen, daß ein ohmscher Meßwiderstand, an dem ein dem Fehlerstrom entsprechender Spannungsabfall abgreifbar ist, in einer einen Betriebswechselstrom führenden Leitung im getakteten Spannungswandler angeordnet ist und daß Mittel vorgesehen sind zum Unterdrücken des Anteils des am Meßwiderstands abgreifbaren Spannungssignals, dessen Frequenz der Schaltfrequenz des getakteten Spannungswandlers entspricht.

Die erfindungsgemäße getaktete Stromversorgung ermöglicht die Ermittlung eines gegebenenfalls auftretenden Fehlerstroms, dessen Frequenz von der Schaltfrequenz des getakteten Spannungswandlers abweicht. Besonders einfach ist die Ermittlung eines Fehlerstroms, der Gleichstromkomponenten aufweist.

Vorteilhafte Weiterbildungen und Ausgestaltungen der erfindungsgemäßen getakteten Stromversorgung ergeben sich aus Unteransprüchen.

Ein besonders einfaches Mittel zum Unterdrücken des Anteils des am ohmschen Meßwiderstand abgreifbaren Fehlerstromsignals, dessen Frequenz der Schaltfrequenz des getakteten Spannungswandlers entspricht, ist ein Tiefpaß, dessen Grenzfrequenz unterhalb der Taktfrequenz liegt.

Eine andere, besonders vorteilhafte Weiterbildung sieht vor, daß als Mittel zum Unterdrücken des Anteils des am ohmschen Meßwiderstand abgreifbaren Fehlerstromsignals, dessen Frequenz der Taktfrequenz des getakteten Spannungswandlers entspricht, ein zum ohmschen Meßwiderstand parallel geschalteter Kondensator vorgesehen ist. Der wesentliche Vorteil dieser Maßnahme liegt darin, daß nahezu der gesamte Betriebswechselstrom des getakteten Spannungswandlers über den parallel zum ohmschen Meßwiderstand liegenden Kondensator fließen kann. Der in die den Betriebswechselstrom führende Leitung eingefügte ohmsche Meßwiderstand reduziert bei dieser Weiterbildung den Wirkungsgrad des getakteten Spannungswandlers nur sehr gering. Der frequenzabhängige kapazitive Widerstand des Kondensators realisiert gleichzeitig die Tiefpaßfunktion.

In einer anderen Ausgestaltung ist vorgesehen, daß die Fehlerstromermittlung einen Gleichrichter zur Gleichrichtung des am ohmschen Widerstand abgreifbaren Fehlerstromsignals enthält. Mit dieser Maßnahme ist auch ein Fehlerstromsignal ermittelbar, das keinen Gleichstromanteil aufweist.

In einer vorteilhaften Ausgestaltung der erfindungsgemäßen getakteten Stromversorgung ist ein am Ausgang des getakteten Spannungswandlers angeordneter Wechselrichter vorgesehen. Der Wechselrichter formt die am Ausgang des getakteten Spannungswandlers auftretende Gleichspannung in eine Wechselspannung um, die beispielsweise zur Energieversorgung einer Gasentladungslampe geeignet ist. Schädliche Ionenwanderungen in der Gasentladungslampe werden mit dieser Maßnahme verhindert.

Eine vorteilhafte Weiterbildung der erfindungsgemäßen getakteten Stromversorgung betrifft den getakteten Spannungswandler, der einer einzigen Wandlertransformator enthält, der drei getrennte Wicklungen trägt. Eine erste Wicklung ist mit einem Leistungsschalter parallel zu einer Energiequelle schaltbar. Die erste und eine zweite Wicklung, die in Reihe mit einem Längskondensator geschaltet ist, sowie eine Diode bilden einen Ladestromkreis für den Längskondensator bei geöffnetem Leistungsschalter. Die aus der ersten Wicklung, der zweiten Wicklung und dem Längskondensator bestehende Reihenschaltung ist über eine dritte Wicklung an einem ausgangsseitigen Glättungskondensator angeschlossen. Der Vorteil dieser Schaltung liegt darin, daß die Leistungsübertragung zum Ausgang hin sowohl kapazitiv als auch induktiv über den Wandlertransformator erfolgt. Insgesamt ergibt sich ein extrem hoher Wirkungsgrad des Spannungswandlers.

Die erfindungsgemäße getaktete Stromversorgung ist insbesondere als Vorschaltgerät zum Betreiben von Gasentladungslampen geeignet, die in einem Kraftfahrzeug angeordnet sind. Bei dieser Verwendung ist nicht auszuschließen, daß Personen bei unsachgemäßen Wartungsarbeiten oder Reparaturarbeiten versehentlich spannungsführende Teile oder Verbindungsleitungen berühren können. Weitere vorteilhafte Weiterbildungen und Ausgestaltungen der erfindungsgemäßen getakteten Stromversorgung ergeben sich aus weiteren abhängigen Ansprüchen in Verbindung mit der folgenden Beschreibung.

### Zeichnung

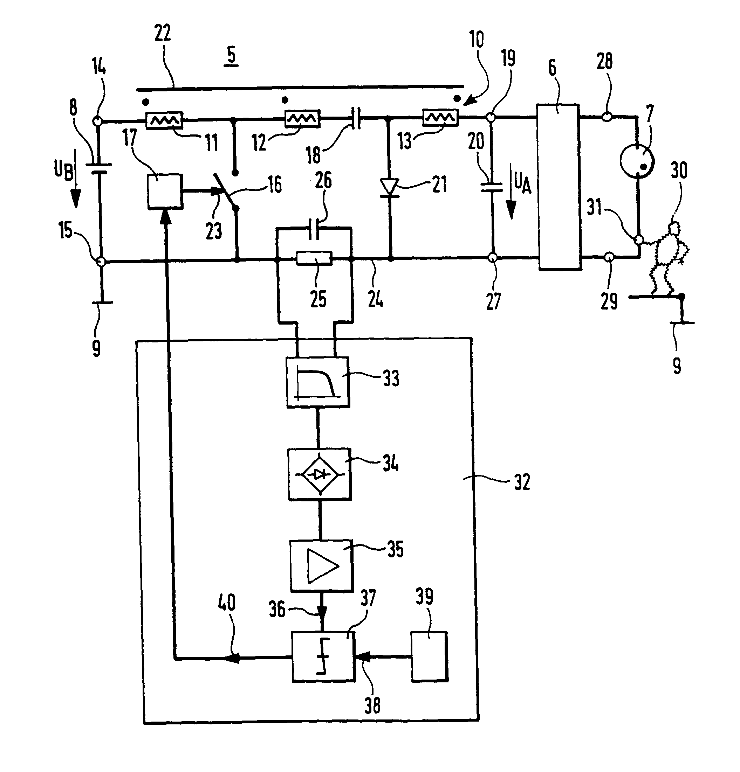

Ein Schaltbild einer erfindungsgemäßen getakteten Stromversorgung ist in der Figur gezeigt.

Die erfindungsgemäße getaktete Stromversorgung enthält einen getakteten Spannungswandler 5, der über einen Wechselrichter 6 mit einer Gasentladungslampe 7 verbunden ist. Der Spannungswandler 5 enthält einen Wandlertransformator 10, der eine erste Wicklung 11, eine zweite Wicklung 12 und eine dritte Wicklung 13 aufweist. Die erste Wicklung 11 und die zweite Wicklung 12 bilden eine geteilte Primärwicklung, während die dritte Wicklung 13 eine Sekundärwicklung darstellt. Eine Energiequelle 8, die eine vorgegebene Eingangsspannung U_{B} bereitstellt, liegt zwischen einer mit der ersten Wicklung 11 verbundenen ersten Eingangsklemme 14 und einer mit einer Masse 9 verbundenen zweiten Eingangsklemme 15. Ein Verbindungspunkt zwischen der ersten Wicklung 11 und der zweiten Wicklung 12 ist über einen Leistungsschalter 16 an Masse 9 schaltbar. Zum Öffnen und Schließen des Leistungsschalters 16 ist ein Schaltsignal 23 vorgesehen, das von einer Taktschaltung 17 abgegeben wird.

Der von der ersten Wicklung 11 des Wandlertransformators 10 abgewandte Anschluß der zweiten Wicklung 12 ist über die Reihenschaltung eines Längskondensators 18 mit der entgegengesetzt zu den ersten beiden Wicklungen 11, 12 gepolten dritten Wicklung 13 an einer ersten Ausgangsklemme 19 angeschlossen. Der Verbindungspunkt zwischen Längskondensator 18 und dritter Wicklung 13 ist über eine Diode 21 mit einer zweiten Ausgangsklemme 27 verbunden. Zwischen die Ausgangsklemmen 19, 27 ist ein Glättungskondensator 20 geschaltet, an dem eine Ausgangsspannung U_{A} auftritt.

Die drei Wicklungen 11, 12, 13 sind auf einem gemeinsamen Transformatorkern 22 gewickelt, wobei die Anschlüsse der Wicklungen 11, 12, 13 mit gleichem Wicklungssinn in der Figur jeweils mit Punkten gekennzeichnet sind.

In einer Leitung 24, die zwischen Masse 9 und der zweiten Ausgangsklemme 27 liegt, fließt ein Betriebswechsestrom des getakteten Spannungswandlers 5. In der Leitung 24 ist ein ohmscher Meßwiderstand 25 eingefügt, der mit einem Parallelkondensator 26 überbrückt ist.

An den beiden Ausgangsklemmen 19, 27 ist der Wechselrichter 6 angeschlossen, der an einem ersten und zweiten Lampenanschluß 28, 29 eine Betriebswechselspannung für die Gasentladungslampe 7 bereitstellt. Eine Person 30, die eine kapazitive und/oder galvanische Verbindung zur Masse 9 hat, kann an einem Berührungspunkt 31 spannungsführende Teile der getakteten Stromversorgung berühren.

Ein am ohmschen Meßwiderstand 25 auftretender Spannungsabfall wird einer Fehlerstromermittlung 32 zugeleitet. Der am Meßwiderstand 25 abgreifbare Spannungsabfall gelangt nach einer Filterung in einem Tiefpaß 33, einer Gleichrichtung in einem Gleichrichter 34 und einer Verstärkung in einem Verstärker 35 als aufbereitetes Signal 36 in einen Vergleicher 37, der das aufbereitete Signal 36 mit einer vorgegebenen Schwelle 38 vergleicht, die ein Grenzwertgeber 39 bereitstellt. Der Vergleicher 37 gibt ein Abschaltsignal 40 an die Taktschaltung 17 ab.

Die erfindungsgemäße getaktete Stromversorgung arbeitet folgendermaßen:

Der getaktete Spannungswandler 5 hat die Aufgabe, die vorgegebene Eingangsspannung U_{B} in die vorgegebene Ausgangsspannung U_{A} umzusetzen, die zwischen der ersten und zweiten Ausgangsklemme 19, 27 abgreifbar ist. Einrichtungen, die vorgesehen sind, um die Ausgangsspannung U_{A} in Abhängigkeit von Meßgrößen, beispielsweise dem durch die Gasentladungslampe 7 fließenden Strom und/oder der Lampenbetriebsspannung und/oder der Ausgangsspannung U_{A} selbst und/oder der Eingangsspannung U_{B} konstant zu halten, sind in der Figur nicht näher gezeigt. Diese Einflüsse werden bei der Erzeugung des Schaltsignals 23 in der Taktschaltung 17 berücksichtigt. Das Schaltsignal 23 kann eine variable Frequenz und/oder ein variables Tastverhältnis aufweisen.

Die Frequenz des Schaltsignals 23 liegt vorzugsweise im Kilohertzbereich. Die Frequenz oder präziser, die Grundfrequenz des im allgemeinen rechteckförmigen Schaltsignals 23, liegt beispielsweise in einem Bereich von 10 kHz bis einigen hundert kHz. Als Leistungsschalter 16 ist vorzugsweise ein Leistungs-MOSFET vorgesehen.

Für die nachfolgenden Spannungsangaben wird vorausgesetzt, daß sich die Windungszahlen der drei Wicklungen 11, 12, 13 vorzugsweise verhalten wie 1:2:3 und daß die Eingangsspannung U_{B} 10 Volt beträgt. Die Ausgangsspannung U_{A} sei auf einen Wert von - 150 Volt festgelegt. Zunächst sei der Leistungsschalter 16 geschlossen. Die erste Wicklung 11 liegt dadurch an der Eingangsspannung U_{B} und der Strom durch die erste Wicklung 11 steigt an. Wird der Leistungsschalter 16 dann geöffnet, so kommutiert der durch den Leistungsschalter 16 fließende Strom auf die zweite Wicklung 12 und lädt den Längskondensator 18 über die leitende Diode 21 auf eine positive Spannung von im Beispiel 160 Volt auf. Wird der Leistungsschalter 16 nun wieder geschlossen, so liegt die erste Wicklung 11 wieder an der Eingangsspannung U_{B} und die linke Seite des Längskondensators 18 liegt über die zweite Wicklung 12 und den Leistungsschalter 16 auf einer Spannung von - 2 x U_{B}, also auf - 20 Volt, da der aus den ersten beiden Wicklungen 11, 12 gebildete Teiltransformator ein Übersetzungsverhältnis von 2 aufweist. An der Diode 21 liegt eine negative Spannung von - 180 Volt, so daß diese sperrt. Der zwischen den beiden Ausgangsklemmen 19, 27 liegende Glättungskondensator 20 liegt nun über die in der dritten Wicklung 13 induzierten Spannung von - 30 Volt (der aus der ersten Wicklung 11 und der dritten Wicklung 13 gebildete Teiltransformator hat ein Übersetzungsverhältnis von 3) an dieser negativen Spannung. Es ergibt sich daher eine Ausgangsspannung U_{A} von - 150 Volt (die negative Kondensatorspannung am Längskondensator 18 vermindert um die Eingangsspannung U_{B}). Die Spannung an der dritten Wicklung 13 ist immer so gepolt, daß während der Aufladephase des Längskondensators 18 der Glättungskondensator 20 nicht entladen wird. Die Bedingung hierfür ist zum einen, daß für die Windungszahlen gilt, daß die Windungszahl der dritten Wicklung 13 gleich der Summe der Wicklungszahlen der ersten und zweiten Wicklungen 11, 12 ist. Die Windungszahlen können sich demnach beispielsweise auch verhalten wie 1:1:2.

Die an den beiden Ausgangsklemmen 19, 27 zur Verfügung gestellte Gleichspannung ist im allgemeinen noch nicht unmittelbar zur Versorgung der Gasentladungslampe 7 geeignet, die als Beispiel für einen elektrischen Verbraucher vorgesehen ist. Eine Gleichspannungsversorgung würde zu einer Überhitzung der Anode führen, die die Gasentladungslampe 7, zerstören würde, und die in der Lampe enthaltenen ionisierten Gase würden sich entmischen. Vorgesehen ist daher der Wechselrichter 6, der aus der zwischen den beiden Ausgangsklemmen 19, 27 liegenden Ausgangsspannung U_{A} eine für die Gasentladungslampe 7 geeignete Wechselspannung umformt. Der Wechselrichter 6 kann beispielsweise als Halbbrücken- oder Vollbrückenschaltung realisiert sein. Ein Ausführungsbeispiel des Wechselrichters 6 ist in der eingangs genannten DE-PS 41 41 804 näher beschrieben. Der Wechselrichter 6 ändert die Polarität der an den beiden Lampenanschlüssen 28, 29 entnehmbaren Betriebsspannung für die Gasentladungslampe 7 im Takte einer vorgegebenen Schaltfrequenz, die beispielsweise einige hundert Hz betragen kann. Bei dem in der Figur gezeigten Ausführungsbeispiel der getakteten Stromversorgung wird das an der ersten Ausgangsklemme 19 auftretende negative Potential mit dem vergleichsweise niederfrequenten Takt von einigen hundert Hz abwechselnd auf den ersten und zweiten Lampenanschluß 28, 29 gegeben. An der Gasentladungslampe 7 liegt daher im zeitlichen Mittel negatives Potential gegenüber dem Potential der Masse 9 an. Mit dieser Maßnahme wird ebenfalls eine schädliche Ionenwanderung verhindert, bei der Ionen in den Lampenkörper wandern könnten. Da sich die Umgebung der Lampe, beispielsweise eine Leuchte oder beispielsweise eine Kraftfahrzeugkarosserie, im zeitlichen Mittel auf positiven Potential gegenüber der Gasentladungslampe 7 befindet, werden positive Ionen in das Lampenplasma hineingedrückt.

Während unsachgemäßer Wartungsarbeiten oder Reparaturen ist nicht auszuschließen, daß die Person 30 spannungsführende Teile der getakteten Stromversorgung berührt.

Während der getaktete Spannungswandler 5 und gegebenenfalls der Wechselrichter 6 innerhalb eines hermetisch dichten Gehäuses angeordnet sind, das ohnehin nur von besonders unterwiesenen Personen geöffnet werden darf, ist nicht auszuschließen, daß unsachgemäß freigelegte Zuleitungen, die zwischen der Gasentladungslampe 7 und den beiden Lampenanschlüssen 28, 29 liegen, berührt werden.

Eine Berührung von spannungsführenden Teilen könnte ebenfalls bei einem unsachgemäßen Lampenwechsel möglich sein.

Ein durch die Person 30 fließender Strom, der als Fehlerstrom bezeichnet wird, fließt vom Berührungspunkt 31 gegen Masse 9. Der Fehlerstrom kann sowohl ein Gleichstrom als auch ein Wechselstrom sein. Ein Gleichstrom tritt insbesondere durch unmittelbaren Hautkontakt mit Masse 9 auf. Auch Verschmutzungen oder Feuchtigkeit in Kleidungsstücken stellen eine galvanische Verbindung zur Masse 9 her. Ein kapazitiver Verschiebungsstrom tritt ohne galvanische Verbindung stets auf. Der Betrag des Fehlerstroms ist auf ungefährliche Werte zu begrenzen. Der maximal zulässige Fehlerstrom liegt derzeit in einem Bereich von etwa 10 bis 30 mA.

Der durch die Person 30 fließende Fehlerstrom gegen Masse 9 tritt auch im ohmschen Meßwiderstand 25 auf, wobei der Fehlerstrom dem Betriebswechselstrom des getakteten Spannungswandlers 5 überlagert ist. Da der Betriebswechselstrom des getakteten Spannungswandlers 5 einige Ampere betragen kann, sind zum sicheren Erkennen eines Fehlerstroms Mittel vorgesehen zum Unterdrücken des Anteils des am ohmschen Meßwiderstand 25 abgreifbaren Fehlerstromsignals, dessen Frequenz der des Schaltsignals 23 entspricht.

Beispielsweise ist der Tiefpaß 33 vorgesehen, der aus dem am Meßwiderstand 25 abgreifbaren Spannungssignal den Schaltsignalanteil herausfiltert. Die Grenzfrequenz des Tiefpasses 33 ist vorzugsweise auf einen Wert festgelegt, der die niedrige Umschaltfrequenz, die der Wechselrichter 6 erzeugt, noch nicht erfaßt. Ein Fehlerstromsignal mit der niedrigen Frequenz des Wechselrichters 6, das mit dem gegebenenfalls vorhandenen Gleichrichter 34 gleichgerichtet wird, ist somit auswertbar. Der Gleichrichter 34 ist zur Vereinfachung der Signalverarbeitung vorgesehen, wobei die nachfolgenden elektronischen Funktionseinheiten lediglich Gleichsspannungssignale verabeiten müssen. Der Verstärker 35 ist gegebenenfalls vorgesehen, um das Signal auf ein vorgegebenes Spannungsniveau anzuheben, das leicht handhabbar ist. Das aufbereitete Signal 36 wird im Vergleicher 37 mit dem Schwellwert 38 verglichen, den der Grenzwertgeber 39 bereitstellt. Der Schwellwert 38 ist ein Maß für den maximal zulässigen Fehlerstrom, bei dessen Überschreitung das Abschaltsignal 40 vom Vergleicher 37 abgegeben wird. Das Abschaltsignal 40 ist im gezeigten Ausführungsbeispiel der Taktschaltung 17 zugeleitet. Ein Abschalten des Schaltsignals 23 durch Öffnen des Leistungsschalters 16 bewirkt ein Abschalten des getakteten Spannungswandlers 5. Anstelle der im Ausführungsbeispiel gezeigten Beaufschlagung der Taktschaltung 17 mit dem Abschaltsignal 40 ist es auch möglich, einen in der Figur nicht gezeigten Schalter, beispielsweise ein Relais, zu öffnen. Wesentlich ist die Abschaltung der getakteten Stromversorgung derart, daß die maximal auftretende Spannung an allen möglichen Berührungspunkten 31 auf ungefährliche Werte abgesenkt werden.

Der in der Leitung 24 angeordnete ohmsche Meßwiderstand 25 stellt für den Betriebswechselstrom des getakteten Spannungswandlers 5 einen Verlustwiderstand dar. Prinzipiell ist es möglich, den ohmschen Meßwidestand 25 sehr niederohmig, beispielsweise kleiner als 0,1 Ohm, auszubilden. Eine einfache Auswertung des aufbereiteten Signals 26 ist dann nur nach einer vergleichsweise großen Verstärkung mittels des Verstärkers 35 möglich. Abhilfe schafft die besonders vorteilhafte Maßnahme, die den Parallelkondensator 26 vorsieht. Der Parallelkondensator 26 überbrückt den ohmschen Meßwiderstand 25 und ermöglicht deshalb bei geeigneter Festlegung der Kapazität ein nahezu verlustloses Führen des Betriebswechselstromes des getakteten Spannungswandlers 5 in der Leitung 24. Der Einsatz des Parallelkondensators 26 ermöglicht es, den Widerstandswert des ohmschen Meßwiderstands 25 auf höhere Werte, beispielsweise auf 10 Ohm, festzulegen. Der separat herausgebildete Verstärker 35 kann gegebenenfalls entfallen. Die Verstärkungsfunktion des Vergleichers 37 kann allein ausreichend sein. Der Einsatz des Parallelkondensators 26 realisiert auch die Funktion des Tiefpasses 33, der entfallen kann. Das Herausbilden einer definierten Grenzfrequenz ist mit dem Parallelkondensator 26 allein nicht möglich, weil dessen kapazitiver Widerstand erst bei gegen Null strebender Frequenz gegen Unendlich geht. Bei genügend großem Unterschied zwischen der Frequenz des Schaltsignals 23 und der Umschaltfrequenz des Wechselrichters 6 ist es durch entsprechende Festlegung der Kapazität des Parallelkondensators 26 aber ohne weiteres möglich, daß die Umschaltfrequenz des Wechselrichters 6 und somit ein möglicher Fehlestrom mit der entsprechenden Frequenz, vom Parallelkondensator 26 nicht völlig kurzgeschlossen wird. Bei einer angenommenen Frequenz des Schaltsignals 23 von 200 kHz und einer angenommenen Umschaltfrequenz des Wechselrichters 6 von 400 Hz beträgt die Kapazität des Parallelkondensators 26 ungefähr ein Mikrofarad.

Ein wesentlicher Vorteil der erfindungsgemäßen getakteten Stromversorgung ist es, daß zwischen der Energiequelle 8 und dem Verbraucher, der Gasentladungslampe 7, keine Potentialtrennung vorgesehen sein braucht. Es ist daher ohne weiteres möglich, beispielsweise die zweite Ausgangsklemme 27, die über den ohmscher Meßwiderstand 25 niederohmig an Masse 9 liegt, über den Wechselrichter 6 abwechselnd unmittelbar mit dem ersten oder dem zweiten Lampenanschluß 28, 29 zu verbinden. Die mit dem Längskondensator 18 gegebene Potentialtrennung zwischen der zweiten Eingangsklemme 14 und der ersten Ausgangsklemme 19 ist durch das gewählte Schaltungskonzept des getakteten Spannungswandlers 5 vorgegeben. Prinzipiell ist eine derartige Potentialtrennung auch an dieser Stelle nicht erforderlich.

## Patentansprüche

1. Getaktete Stromversorgung, insbesondere zum Betreiben von Gasentladungslampen, mit einem mittels eines Schaltsignals getakteten Spannungswandler (5), der eine Leitung (24) enthält, in welcher der Betriebswechselstrom des getakteten Spannungswandlers fließt, dessen Frequenz gleich der Frequenz des Schaltsignals ist, mit einer Fehlerstromermittlung (32), die einen an einem ohmschen Meßwiderstand (25) auftretenden Spannungsabfall auswertet und die ein Abschaltsignal (40) an das elektronische Vorschaltgerät abgibt, dadurch gekennzeichnet, daß der ohmsche Meßwiderstand (25) in der den Betriebswechselstrom führenden Leitung (24) angeordnet ist und daß Mittel (26, 33) vorgesehen sind zum Unterdrücken des Anteils des am ohmschen Meßwiderstand (25) auftretenden Spannungabfalls, dessen Frequenz der des Schaltsignals (23) entspricht.

2. Getaktete Stromversorgung nach Anspruch 1, dadurch gekennzeichnet, daß als Mittel ein Tiefpaß (33) vorgesehen ist.

3. Getaktete Stromversorgung nach Anspruch 1, dadurch gekennzeichnet, daß als Mittel ein den ohmschen Meßwiderstand (22) überbrückender Parallelkondensator (26) vorgesehen ist.

4. Getaktete Stromversorgung nach Anspruch 3, dadurch gekennzeichnet, daß die Kapazität des Parallelkondensators (26) auf einen Wert festgelegt ist, bei dem der kapazitive Widerstand bezüglich der Frequenz des Schaltsignals (23) vernachlässigbar klein ist.

5. Getaktete Stromversorgung nach Anspruch 1, dadurch gekennzeichnet, daß die Fehlerstromermittlung (32) einen Gleichrichter (34) zum Gleichrichten des am ohmschen Meßwiderstand (25) auftretenden Spannungabfalls aufweist.

6. Getaktete Stromversorgung nach Anspruch 1, dadurch gekennzeichnet, daß der getaktete Spannungswandler (5) einen Wandlertransformator (10) enthält, der drei Wicklungen (11, 12, 13) aufweist, wobei die erste Wicklung (11) in Reihe mit einem vom Schaltsignal (23) gesteuerten Leistungsschalter (16) von einer Eingangsspannung U_{B} beaufschlagt ist und wobei die erste und eine zweite Wicklung (11, 12) in Reihe mit einem Längskondensator (18) und einer Diode (21) einen Ladestromkreis für den Längskondensator (18) bei geöffnetem Leistungsschalter (16) bilden, und daß ein zwischen Ausgangsklemmen (19, 27) geschalteter Glättungskondensator (20) über eine dritte Wicklung (13) mit dem Längskondensator (18) verbunden ist, wobei alle Wicklungen (11, 12, 13) auf einem gemeinsamen Transformatorkern (22) angeordnet sind.

7. Getaktete Stromversorgung nach Anspruch 6, dadurch gekennzeichnet, daß die Windungszahl der dritten Wicklung (13) im wesentlichen der Summe der Windungszahlen der ersten und zweiten Wicklung (11, 12) entspricht.

8. Getaktete Stromversorgung nach Anspruch 7, dadurch gekennzeichnet, daß das Verhältnis der Windungszahlen der drei Wicklungen (11, 12, 13) im wesentlichen 1:2:3 oder 1:1:2 beträgt.

9. Getaktete Stromversorgung nach Anspruch 1, dadurch gekennzeichnet, daß dem getakteten Spannungswandler (5) ein Wechselrichter (6) nachgeschaltet ist.

10. Verwendung einer getakteten Stromversorgung nach Anspruch 1 in einem Kraftfahrzeug zur Energieversorgung einer Gasentladungslampe (7), die in einem Scheinwerfer vorgesehen ist.

## Claims

1. Clocked power supply, in particular for operating gas discharge lamps, having a voltage converter (5) which is clocked by means of a switching signal and contains a line (24) in which the alternating operating current of the clocked voltage converter flows, the frequency of which alternating operating current is equal to the frequency of the switching signal, having a fault current detection means (32) which evaluates a voltage drop occurring at an ohmic measuring resistor (25) and which emits a switch-off signal (40) to the electronic ballast, characterized in that the ohmic measuring resistor (25) is arranged in the line (24) which conducts the alternating operating current, and in that means (26, 33) are provided for suppressing the portion of the voltage drop which occurs at the ohmic measuring resistor (25) and whose frequency corresponds to that of the switching signal (23).

2. Clocked power supply according to Claim 1, characterized in that a low pass filter (33) is provided as means.

3. Clocked power supply according to Claim 1, characterized in that a parallel capacitor (26) which bridges the ohmic measuring resistor (22) is provided as means.

4. Clocked power supply according to Claim 3, characterized in that the capacitance of the parallel capacitor (26) is fixed at a value in which the capacitive resistance is negligibly small in relation to the frequency of the switching signal (23).

5. Clocked power supply according to Claim 1, characterized in that the fault current detection means (32) has a rectifier (34) for rectifying the voltage drop occurring at the ohmic measuring resistor (25).

6. Clocked power supply according to Claim 1, characterized in that the clocked voltage converter (5) contains a transformer (10) which has three windings (11, 12, 13), the first winding (11) being supplied with an input voltage U_{B} in series with a circuit breaker (16) controlled by the switching signal (23), and the first winding and a second winding (11, 12) in series with a longitudinal capacitor (18) and a diode (21) forming a charging circuit for the longitudinal capacitor (18) when the circuit breaker (16) is opened, and in that a smoothing capacitor (20) which is connected between output terminals (19, 27) is connected to the longitudinal capacitor (18) via a third winding (13), all windings (11, 12, 13) being arranged on a common transformer core (22).

7. Clocked power supply according to Claim 6, characterized in that the number of turns of the third winding (13) corresponds essentially to the sum of the number of turns of the first and second windings (11, 12).

8. Clocked power supply according to Claim 7, characterized in that the ratio of the number of turns of the three windings (11, 12, 13) is essentially 1:2:3 or 1:1:2.

9. Clocked power supply according to Claim 1, characterized in that a power inverter (6) is connected downstream of the clocked voltage converter (5).

10. Use of a clocked power supply according to Claim 1 in a motor vehicle for supplying energy to a gas discharge lamp (7) which is provided in a headlight.

## Revendications

1. Alimentation en courant, cadencée notamment pour des lampes à décharge de gaz comprenant un transformateur de tension cadencée par un signal de commutation et comprenant une ligne (24) traversée par le courant alternatif de fonctionnement du transformateur de tension cadencée, dont la fréquence est égale à la fréquence du signal de commutation,
un élément pour déterminer la moyenne du courant de défaut (32) qui exploite la différence de tension aux bornes d'une résistance ohmique de mesure (25) et fournit un signal de coupure (40) à un appareil électronique intermédiaire,
caractérisée en ce que
- la résistance de mesure ohmique (25) est montée dans la ligne (24) traversée par le courant alternatif de fonctionnement et
- des moyens pour éliminer la composante de la différence de tension produite aux bornes de la résistance ohmique de mesure (25) et dont la fréquence correspond à celle du signal de commutation (23).

2. Alimentation cadencée selon la revendication 1,
caractérisée en ce que
le moyen est un filtre passe-bas (33).

3. Alimentation cadencée selon la revendication 1,
caractérisée en ce que
le moyen est un condensateur en parallèle (26) qui shunte la résistance ohmique de mesure (22).

4. Alimentation cadencée selon la revendication 3,
caractérisée en ce que
la capacité du condensateur parallèle (26) est fixée à une valeur pour laquelle la résistance capacitive par rapport à la fréquence du signal de commutation (23) est faible à un niveau négligeable.

5. Alimentation cadencée selon la revendication 1,
caractérisée en ce que
le moyen (32) pour déterminer le courant de défaut comprend un redresseur (34) pour redresser la chute de tension aux bornes d'une résistance ohmique de mesure.

6. Alimentation cadencée selon la revendication 1,
caractérisée en ce que
- le transformateur de tension cadencée (5) comporte un transformateur (10) à trois enroulements (11, 12, 13), le premier enroulement (11) recevant une tension d'entrée U_{B} en série avec un commutateur de puissance (16) commandé par un signal de commutation (23) et le premier et le second enroulement (11, 12) formant en série avec un condensateur longitudinal (18) et une diode (21), un circuit de courant de charge du condensateur longitudinal (18) lorsque le commutateur de puissance (16) est ouvert et
- un condensateur de lissage (20) branché entre les bornes de sortie (19, 27) reliées au condensateur (18) par un troisième enroulement (13),
- tous les enroulements (11, 12, 13) étant montés sur un noyau de transformateur commun (22).

7. Alimentation cadencée selon la revendication 6,
caractérisée en ce que
le nombre de spires du troisième enroulement (13) correspond pour l'essentiel à la somme du nombre de spires du premier et du second enroulement (11, 12).

8. Alimentation cadencée selon la revendication 7,
caractérisée en ce que
le rapport du nombre de spires des trois enroulements (11, 12, 13) est essentiellement selon le rapport complexe 1:2:3 ou 1:1:2.

9. Alimentation cadencée selon la revendication 1,
caractérisée en ce qu'
un onduleur (6) est prévu en aval du transformateur de tension cadencée (5).

10. Application d'une alimentation en courant cadencée selon la revendication 1 à un véhicule automobile pour assurer l'alimentation d'une lampe à décharge de gaz (7) équipant un projecteur.
